Europäisches Patentamt

European Patent Office

Office européen des brevets

(19)

(11) Numéro de publication: **0 171 317**
**B1**

(12) # FASCICULE DE BREVET EUROPÉEN

(45) Date de publication du fascicule du brevet:
08.03.89

(51) Int. Cl.⁴: **H 01 C 10/02,** H 02 P 1/36

(21) Numéro de dépôt: **85401381.0**

(22) Date de dépôt: **08.07.85**

(54) Rhéostat à résistance liquide à circulation d'électrolyte.

(30) Priorité: **10.07.84 FR 8410944**

(43) Date de publication de la demande:
**12.02.86 Bulletin 86/7**

(45) Mention de la délivrance du brevet:
**08.03.89 Bulletin 89/10**

(84) Etats contractants désignés:
**AT BE CH DE FR GB IT LI LU NL SE**

(56) Documents cité:
**DE-C-816 436**
**FR-A-2 395 578**
**FR-A-2 532 101**
**GB-A-2 030 783**
**US-A-4 232 998**

(73) Titulaire: **Bensadoun, Michel, Le Montin, F-87270 Couzeix (FR)**

(72) Inventeur: **Bensadoun, Michel, Le Montin, F-87270 Couzeix (FR)**

(74) Mandataire: **CABINET BONNET- THIRION, 95 Boulevard Beaumarchais, F-75003 Paris (FR)**

EP 0 171 317 B1

LIBER, STOCKHOLM 1989

## Description

La présente invention concerne d'une manière générale les rhéostats à résistance liquide, plus communément dits sous forme abrégée rhéostats liquides, du type de ceux mis en oeuvre pour la desserte contrôlée d'un quelconque appareil par une source d'alimentation électrique, et, plus précisément, pour le démarrage contrôlé d'un quelconque moteur électrique.

Ainsi qu'on le sait, un tel rhéostat à résistance liquide comporte, globalement, une cuve, qui contient de l'électrolyte, ou, d'une manière plus générale, un quelconque liquide conducteur, et au moins deux électrodes, qui, établies à distance l'une de l'autre, sont destinées à coopérer avec ledit électrolyte.

Du point de vue du mode de branchement de leurs électrodes, les rhéostats à résistance liquide connus à ce jour peuvent globalement être rangés dans l'une ou l'autre de deux grandes catégories.

Il y a tout d'abord ceux dans lesquels les électrodes présentes dans la cuve à électrolyte sont toutes de même nature, en étant en pratique toutes reliées à l'appareil à commander.

S'agissant d'un moteur, il y a ainsi, dans la cuve à électrolyte, une électrode par phase, ou pôle, de ce moteur.

C'est, dès lors, par la hauteur d'immersion des électrodes dans l'électrolyte qu'est contrôlé le courant à délivrer, ladite hauteur d'immersion étant modulée entre deux niveaux déterminés.

Pour le niveau inférieur, seule une portion relativement réduite des électrodes est immergée, et il en résulte que ces électrodes introduisent alors une résistance relativement élevée dans le circuit dans lequel elles sont insérées; au contraire, pour le niveau supérieur, les électrodes sont en quasi totalité immergées, et elles n'introduisent plus qu'une résistance quasi nulle dans ce circuit.

Autrement dit, dans ces rhéostats à résistance liquide à niveau variable, la modulation de résistance est due bien plus aux électrodes, suivant le degré d'immersion de celles-ci, qu'à l'électrolyte.

De tels rhéostats à résistance liquide à niveau variable se trouvent notamment décrits dans la demande de brevet français déposée le 13 Septembre 1978 sous le N° 7826 267 et publiée sous le N° 2 436 484 aussi bien que dans la demande de brevet français déposée le 23 Août 1982 sous le N° 8 214 174 et publiée sous le N° 2 532 101.

Ils ont donné et peuvent encore donner satisfaction.

Mais ils présentent des inconvénients, qui sont les suivants.

En réalité, s'agissant du démarrage des moteurs électriques, ces rhéostats à résistance liquide à niveau variable ne sont bien adaptés qu'aux moteurs à bague, c'est-à-dire aux moteurs à démarrage rotorique, leurs électrodes venant ajouter en série leur résistance à celles des bobinages du rotor de ces moteurs, et, de fait, au démarrage de ceux-ci, ils permettent un contrôle relativement aisé de leur couple, en s'ajustant d'eux-mêmes à un tel couple.

Mais, par contre, les rhéostats à résistance liquide à niveau variable conviennent mal aux moteurs à cage, c'est-à-dire aux moteurs à démarrage statorique.

De tels moteurs ont l'avantage de permettre un démarrage sous deux tensions, suivant le montage, en étoile ou en triangle, des bobines de leur stator, et ces bobines, réalisees en fil fin, sont relativement économiques.

Lorsque leur montage est en triangle, et le cas doit être systématiquement prévu, il est difficile de leur associer, pour leur démarrage, un rhéostat à résistance liquide à niveau variable.

En effet, si une cuve à électrolyte unique est alors mise en oeuvre, elle conduit immanquablement à un court-circuit entre les diverses phases en cause, et si, pour éviter un tel court-circuit, il est par contre mis en oeuvre, de manière dispendieuse, une cuve à électrolyte distincte pour chacune de ces phases, des problèmes relativement complexes d'isolation de ces cuves les unes par rapport aux autres, et de refroidissement de l'électrolyte contenu dans chacune d'elles, sont alors, de manière quasi rédhibitoire, à surmonter.

La deuxième grande catégorie de rhéostat à résistance liquide est celle des rhéostats dans lesquels les électrodes présentes dans la cuve à électrolyte sont de natures différentes, l'une de ces électrodes, ou l'une au moins d'entre elles, étant alors destinée à être reliée à la source d'alimentation électrique, tandis que l'autre, ou au moins une autre d'elles est destinée à être reliée à l'appareil à desservir par celle-ci.

En pratique, dans ces rhéostats, le niveau d'électrolyte reste constant, et le contrôle recherché du courant délivré est dû à la décroissance de la résistance de cet électrolyte lorsque sa température augmente.

Initialement, cette température est relativement faible, il s'agit par exemple de la température ambiante, et la résistance entre les électrodes est donc relativement grande; cette température augmentant ensuite progressivement, la résistance entre les électrodes diminue, elle, progressivement.

Ainsi donc, dans les rhéostats à résistance liquide à niveau constant de ce type, la modulation de résistance est due en totalité à l'électrolyte, à la différence des rhéostats à résistance liquide à niveau variable dans lesquels elle est due pour l'essentiel aux électrodes.

Un tel rhéostat à résistance liquide à niveau constant se trouve notamment décrit dans le brevet français N° 1 549 390 du 6 Octobre 1976.

Bien que pouvant, lui aussi, donner satisfaction, au moins pour certaines applications, il présente des inconvénients, qui sont les suivants.

Tout d'abord, et comme précédemment, il est nécessaire, pour éviter tout court-circuit, de disposer d'une cuve à électrolyte par phase, avec les inconvénients de complexité et de difficultés d'isolation et de refroidissement précisés ci-dessus.

En outre, et surtout, il y a progressivement, après plusieurs démarrages successifs, une élévation systématique de température de l'électrolyte, dont il résulte, d'une part, qu'aucun de ces démarrages ne se fait dans des conditions identiques, puisque pratiqué à des températures différentes, et que, d'autre part, si de tels démarrages successifs sont très rapprochés, il y a le risque d'un démarrage ultime à intensité maximale, sans plus aucune limitation de courant, au contraire donc de ce qui est recherché, ce qui peut conduire à des situations dangereuses pour l'ensemble de l'installation concernée.

La présente invention a d'une manière générale pour objet un rhéostat à résistance liquide exempt des inconvénients succinctement évoqués ci-dessus et conduisant en outre à d'autres avantages.

De manière plus précise, elle a pour objet un rhéostat à résistance liquide, du genre comportant, d'une part, une cuve contenant de l'électrolyte, et, d'autre part, au moins deux électrodes, qui, établies à distance l'une de l'autre, sont destinées à être reliées l'une à une source d'alimentation électrique, l'autre à l'appareil à desservir par celle-ci, ce rhéostat à résistance liquide étant caractérisé en ce que les dites électrodes définissent entre elles un volume de circulation pour l'électrolyte et en ce qu'il leur est associé des moyens de pulsion propres à assurer de manière contrôlée une circulation effective d'un flux d'électrolyte entre elles.

Ainsi, suivant l'invention, et à la différence des rhéostats à résistance liquide connus à ce jour, dans lesquels, soit le niveau d'électrolyte entre les électrodes n'évolue qu'entre deux valeurs relativement proches l'une de l'autre, pour les rhéostats à résistance liquide à niveau variable, soit stagne à une valeur constante, pour les rhéostats à résistance liquide à niveau constant, il est procédé, suivant l'invention, à une circulation systématique d'électrolyte entre de telles électrodes.

Il en résulte de nombreux avantages.

Tout d'abord, et de manière a priori surprenante, il est avantageusement possible de se satisfaire, pour l'ensemble des phases en jeu, et sans que se produise un court-circuit entre celles-ci, d'une même cuve à électrolyte, bien que, ainsi, un même liquide conducteur soit en relation avec l'ensemble de ces phases.

La raison peut peut-être en être trouvée dans le fait que, d'une phase à l'autre, le cheminement électrique reste important.

Quoi qu'il en soit, le rhéostat à résistance liquide à circulation d'électrolyte suivant l'invention peut ainsi convenir aussi bien, sans aucune complication, et sous un encombrement minimal, au démarrage de moteurs à cage, à démarrage statorique, qu'au démarrage de moteurs à bague, à démarrage rotorique.

En outre, du fait même qu'il est en circulation, l'électrolyte mis en oeuvre n'est en pratique l'objet que d'un échauffement modéré à chaque démarrage, en sorte qu'il est possible d'exécuter de manière fidèlement répétitive un grand nombre de démarrages successifs sans qu'il en résulte une dérive notable des conditions de démarrage assurées.

Mais, si nécessaire, il est possible d'assurer sans complication notable un refroidissement systématique de l'électrolyte.

Il suffit, en effet, de tirer parti des moyens de pulsion mis en oeuvre pour la circulation de cet électrolyte, en envoyant par exemple celui-ci dans un échangeur de chaleur à sa sortie desdits moyens de pulsion, pour sa réfrigération.

Par ailleurs, la circulation suivant l'invention de l'électrolyte permet l'obtention de densités de courant relativement élevées.

La raison en est que, au lieu de stagner, les microbulles de gaz qui apparaissent à la surface des électrodes, et qui, étant isolantes, sont des freins au passage du courant, sont, ici, mécaniquement entraînées par l'électrolyte, au fur et à mesure de leur formation, ce qui régénère systématiquement à tout instant les capacités naturelles d'échange entre cet électrolyte et lesdites électrodes.

Il suffit que la vitesse de circulation de l'électrolyte soit suffisante, sans d'ailleurs qu'une vitesse critique soit à distinguer à ce sujet.

A titre d'illustration, on indiquera que, avec un rhéostat à résistance liquide à circulation d'électrolyte suivant l'invention, il est possible d'obtenir sans complication particulière des densités de courant supérieures à plusieurs ampères au cm$^2$, alors que, par exemple, dans les rhéostats à résistance liquide à niveau constant, chaque électrode travaille au plus à une densité de courant de l'ordre d'un dixième d'ampère au cm$^2$.

En pratique, le courant global possible est inversement proportionnel à la distance entre électrodes, qui peut être très faible, et il est directement proportionnel à la surface mouillée de ces électrodes et à la conductibilité de l'électrolyte entre celles-ci.

Or, suivant un développement de l'invention, le volume de circulation que forme entre elles les électrodes d'une même phase constitue avantageusement par lui-même des moyens de chicane pour l'électrolyte, ce qui, en imposant un parcours en zigzag à cet électrolyte, conduit à des surfaces d'échange relativement élevées sous un volume relativement faible.

Il résulte de ce qui précède que le rhéostat à résistance liquide à circulation d'électrolyte suivant l'invention peut avantageusement se présenter sous un volume relativement réduit, et/ou qu'il peut avantageusement se satisfaire d'un liquide relativement peu conducteur, voire même d'eau ordinaire.

Bien entendu, pour le contrôle du courant entre électrodes d'une même phase, il est possible d'intervenir sur le débit des moyens de pulsion mis en oeuvre pour la circulation de l'électrolyte.

Mais, suivant un développement de l'invention, il est également avantageusement possible d'intervenir sur un débit antagoniste du précédent.

En effet, suivant ce développement de l'invention, le volume de circulation que forment entre elles les deux électrodes d'une même phase constitue avantageusement par lui-même une capacité de retenue pour l'électrolyte, et à ladite capacité de retenue il est associé des moyens d'évacuation propres à en assurer de manière contrôlée la vidange.

Il suffit donc, pour un contrôle du courant entre électrodes, d'ajuster si désiré en conséquence ces moyens d'évacuation, éventuellement concurremment avec le débit des moyens de pulsion associés.

La capacité de retenue que forment ainsi les électrodes de chaque phase présente en outre d'autres avantages.

En maintenant en jeu une quantité élevée d'électrolyte entre ces électrodes, elle permet tout d'abord d'éviter avantageusement toute pointe de courant lorsque, de manière usuelle, au terme du démarrage recherché, un contact mobile vient relier électriquement l'une à l'autre ces électrodes, pour les mettre hors service et ainsi éviter un échauffement inutile de l'électrolyte.

Elle permet, en outre, de pallier les conséquences d'une eventuelle coupure fugitive de l'alimentation des moyens de commande de ce contact, en prenant alors le relais de celui-ci.

Enfin, et surtout, elle permet d'assurer, si désiré, par sa vidange progressive, un arrêt progressif de l'appareil commandé.

Ainsi donc, et suivant une possibilité particulièrement avantageuse de l'invention, il est possible, avec le rhéostat à résistance liquide à circulation d'électrolyte suivant l'invention, et à la différence des autres rhéostats à résistance liquide connus à ce jour, d'assurer, de manière contrôlée, non seulement la montée en vitesse, ou accélération, d'un moteur, mais encore, si désiré, la décélération de celui-ci.

Une telle possibilité peut par exemple trouver son application pour l'arrêt progressif d'une pompe, ce qui peut éviter la production intempestive de coup de bélier, et/ou pour l'arrêt progressif d'un compresseur, ce qui permet d'éviter tout appel de courant, usuellement générateur d'usure et de perturbations diverses, lors d'un tel arrêt.

Enfin, suivant une autre caractéristique, les électrodes du rhéostat à résistance liquide à circulation d'électrolyte suivant l'invention peuvent avantageusement être à distance même de l'électrolyte avant toute intervention.

L'originalité de cette disposition apparaîtra mieux si l'on rappelle que, dans les rhéostats à résistance liquide connus à ce jour, les électrodes sont préférentiellement au moins en partie immergées en position d'attente.

C'est le cas, bien entendu, pour les rhéostats à résistance liquide à niveau constant, dans lesquels les électrodes sont en permanence en totalité immergées dans l'électrolyte.

Mais c'est le cas également pour les rhéostats à résistance liquide à niveau variable, pour éviter un intempestif appel de courant au démarrage, à la prise de contact entre l'électrolyte et les électrodes.

Aucun appel de courant comparable n'est observé au démarrage avec le rhéostat à résistance liquide à circulation d'électrolyte suivant l'invention.

Les électrodes de celui-ci peuvent donc être effectivement initialement à distance de l'électrolyte.

Il en résulte que, assurant alors une coupure galvanique, le rhéostat à résistance liquide à circulation d'électrolyte suivant l'invention peut avantageusement permettre de faire l'économie d'un contacteur de ligne entre lui et la source d'alimentation électrique mise en oeuvre.

Cet avantage est d'autant plus appréciable qu'en pratique les contacteurs de ligne sont usuellement relativement coûteux et que leur prix intervient pour une fraction non négligeable dans le coût d'ensemble d'une installation.

Les caractéristiques et avantages de l'invention ressortiront d'ailleurs de la description qui va suivre, à titre d'exemple, en référence aux dessins schématiques annexés sur lesquels:

la figure 1 est, avec divers arrachements, et élimination quasi totale de son châssis et de son enveloppe, une vue en perspective du rhéostat à résistance liquide suivant l'invention;

la figure 2 en est, à échelle supérieure, une vue en coupe transversale partielle, suivant la ligne II - II de la figure 1;

la figure 3 reprend, à échelle encore supérieure, le détail de la figure 2 repéré par un encart III sur celle-ci;

la figure 4 est, à échelle différente, une autre vue partielle en coupe du rhéostat à résistance liquide suivant l'invention, suivant la ligne IV - IV de la figure 1;

la figure 5 en est, avec des arrachements locaux, une vue partielle de bout, suivant la flèche V de la figure 1;

les figures 6A, 6B, 6C, 6D sont des vues en coupe transversale qui, sur le type de celle de la figure 2, illustrent diverses phases de mise en oeuvre du rhéostat à résistance liquide suivant l'invention;

la figure 7 est une vue en perspective, qui, reprenant pour partie celle de la figure 1, concerne une variante de réalisation;

la figure 8 est une vue partielle en coupe transversale qui, du type de celle de la figure 2, concerne une autre variante de réalisation;

la figure 9 est une vue qui, du type de celles des figures 6, concerne elle aussi une autre variante de réalisation;

les figures 10, 11 sont des vues en perspective illustrant deux variant es de réalisation des électrodes mises en oeuvre dans le rhéostat à résistance liquide suivant l'invention;

la figure 12 est une vue en perspective illustrant une variante de réalisation de la commande associée aux contacts également mis en oeuvre dans ce rhéostat;

la figure 13 est une vue en coupe transversale analogue à celle de la figure 2, pour une autre variante de réalisation des électrodes mises en oeuvre dans le rhéostat à resistance liquide suivant l'invention;

la figure 14 est une vue schématique en perspective d'une autre variante de réalisation de la commande des contacts correspondants;

la figure 15 est, avec un arrachement, une vue schématique en perspective d'une autre variante de réalisation des électrodes.

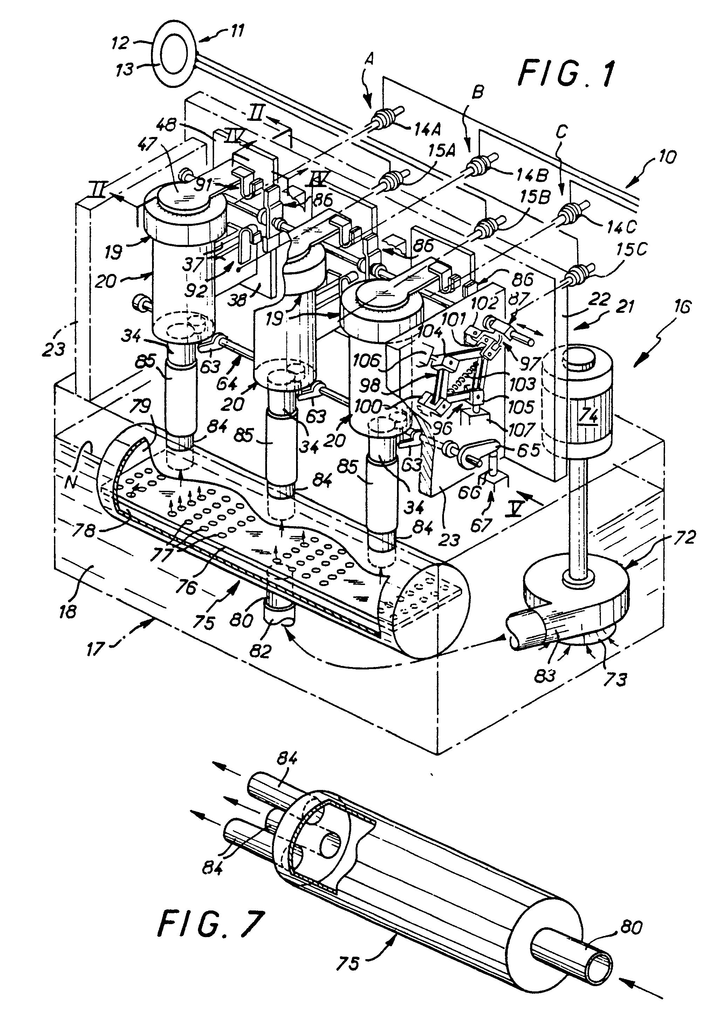

Tel qu'illustré par la figure 1, il s'agit globalement, d'assurer, par une source d'alimentation électrique 10, en pratique le secteur, la desserte d'un moteur 11, dont on a schématisé en 12 le stator et en 13 le rotor, et il s'agit, plus particulièrement, d'assurer le démarrage d'un tel moteur 11.

Par exemple, le moteur ll est un moteur à cage, et il s'agit donc d'un moteur a démarrage statorique.

Quoi qu'il en soit, trois phases, ou pôles, A, B, C son à prendre en considération.

Entre la source d'alimentation 10 et le moteur 11 est interposé un rhéostat à résistance liquide 16, avec des bornes 14A, 14B, 14C pour sa liaison à ladite source d'alimentation 10 et des bornes 15A, 15B, 15C pour sa liaison audit moteur 11.

De manière connue en soi, ce rhéostat à résistance l'quide 16 comporte, d'une part, une cuve 17, qui contient de l'électrolyte 18, et dont seul le contour a été schématisé, en traits interrompus, sur la figure 1, avec indication du niveau N de l'électrolyte qu'elle contient, et, d'autre part, pour chaque phase A, B, C, deux électrodes 19, 20, qui, établies à distance l'une de l'autre, sont reliées, l'une à une borne 14A, 14B, 14C, l'autre à la borne 15A, 15B, 15C correspondante, et qui sont donc destinées à être reliées, la première à la source d'alimentation 10, et la deuxième au moteur 11.

Suivant l'invention, ces électrodes 19, 20 sont établies au-dessus de la cuve à électrolyte 17, sans contact initial avec l'électrolyte 18 contenu dans celle-ci.

Elles sont par exemple portées par une superstructure 21, qui, formant châssis, est elle-même portée par la cuve 17.

La réalisation de cette superstructure 21 relevant de l'homme de l'art, et ne faisant pas partie en soi de la présente invention, elle ne sera pas décrite en détail ici.

Il suffira d'indiquer que cette superstructure 21, qui n'a d'ailleurs été que schématisée, partiellement, et en traits interrompus, sur les figures, peut par exemple comporter un réseau de cloisons longitudinales 22 et transversales 23.

Suivant l'invention, les deux électrodes 19, 20 de chaque phase A, B, C définis sent entre elles un volume de circulation 24 pour l'électrolyte 18, et, ainsi qu'il sera decrit plus en détail ultérieurement, il leur est associé des moyens de pulsion propres à assurer de manière contrôlée une circulation effective d'un flux d'électrolyte entre elles.

En pratique, d'une phase A, B, C à l'autre, les électrodes 19, 20 sont identiques entre elles.

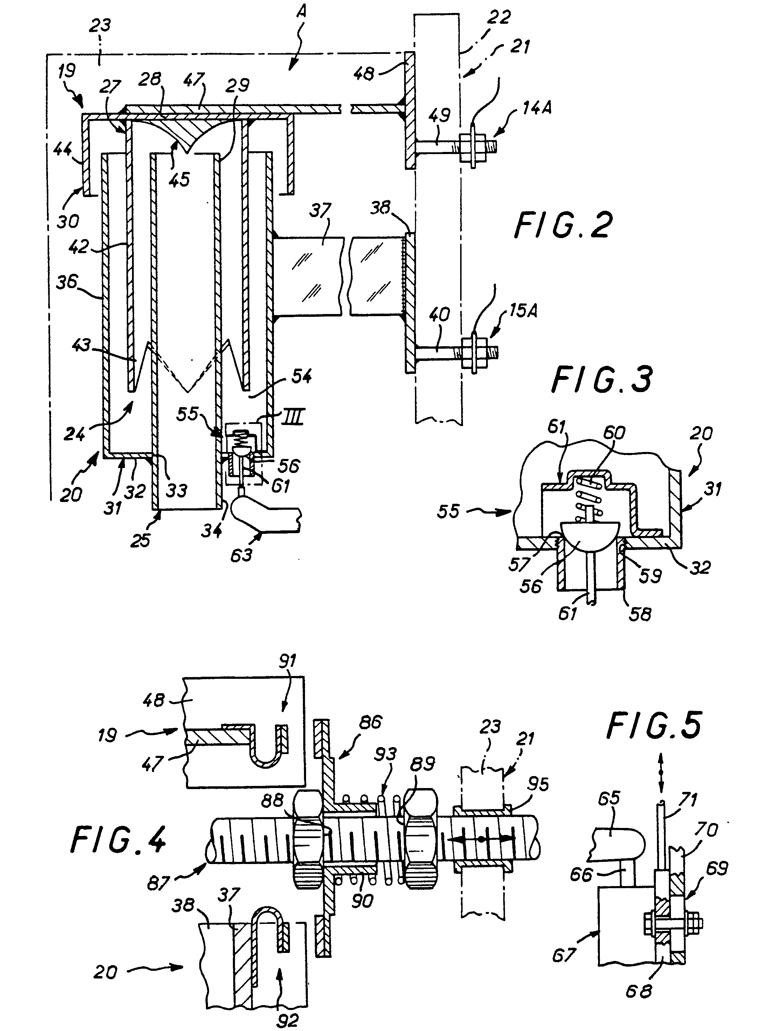

Seules seront donc décrites ici, en référence aux figures 2, 3, les électrodes 19, 20 de la phase A.

Dans la forme de réalisation représentée, ces électrodes 19, 20 sont l'une et l'autre globalement annulaires, et elles sont établies sensiblement coaxialement l'une par rapport à l'autre.

L'une de ces électrodes, en l'espèce l'électrode 20, dite ci-après par simple commodité électrode d'entrée, comporte un organe tubulaire central 25, qui est ouvert à ses deux extrémités, pour entrée du flux d'électrolyte 18, tandis que l'autre, l'électrode 19, dite ci-après par simple commodité électrode de sortie, comporte au moins un organe tubulaire borgne 27, qui est engagé, avec jeu, sur l'organe tubulaire central 25 de l'électrode d'entrée 20.

En pratique, les électrodes 19, 20 étant disposées verticalement, l'organe tubulaire borgne 27 de l'électrode de sortie 19 a son fond 28 du côté de l'extrémité supérieure 29 de l'organe tubulaire central 25 de l'électrode d'entrée 20.

Dans la forme de réalisation représentée, l'électrode de sortie 19 comporte successivement, en anneaux, deux organes tubulaires borgnes, à savoir, outre l'organe tubulaire borgne 27 précédent, un organe tubulaire borgne 30, qui est disposé annulairement autour de celui-ci, et qui a en commun avec lui le fond 28, et, en alternance avec ces organes tubulaires borgnes 27, 30, l'électrode d'entrée 20 comporte, elle-même, autour de son organe tubulaire central 25, un organe tubulaire borgne 31.

Le fond 32 de l'organe tubulaire borgne 31 que comporte ainsi l'électrode d'entrée 20 est ajouré axialement d'un passage 33 à la faveur duquel l'organe tubulaire central 25 qu'il entoure traverse, en étant solidarisé à lui, par exemple par soudage.

L'organe tubulaire central 25 fait pour l'essentiel saillie au-dessus du fond 32 de l'organe tubulaire borgne 31, donc vers le haut.

Seule en fait saillie vers le bas l'extrémité inférieure 34, celle-ci formant ainsi, pour l'ensemble, ainsi qu'il apparaîtra ci-après, un embout de raccordement.

Dans la forme de réalisation représentée, la paroi latérale cylindrique 36 de l'organe tubulaire borgne 31 de l'électrode d'entrée 20 s'étend sensiblement à niveau avec l'organe tubulaire central 25 de celle-ci.

Pour le support de l'ensemble, elle se trouve solidarisée, par exemple par soudage, à deux bras 37, qui, établis parallèlement l'un à l'autre, sont eux-mêmes solidarisés, par exemple par soudage, à un flasque 38 et, celui-ci, pour la fixation de l'ensemble à une cloison longitudinale 22 de la superstructure 21, porte en saillie plusieurs goujons filetés 40, dont un forme, comme indiqué sur la figure 2, la borne 15A correspondante.

Bien entendu, les divers éléments de l'électrode d'entrée 20 ainsi constituée sont métalliques.

Il en est de même pour l'électrode de sortie 19 associée.

Comme indiqué ci-dessus, les organes tubulaires borgnes 27, 30 de celle-ci ont en commun leur fond 28.

Par exemple, l'organe tubulaire 27 est simplement forme par un tronçon de tube rapporté, par exemple par soudage, sur ce fond 28.

Quoi qu'il en soit, dans la forme de réalisation représentée, la paroi latérale cylindrique 42 que constitue ce tronçon de tube est profondément engagée dans le volume annulaire défini par l'organe tubulaire central 25 de l'électrode d'entrée 20 et la paroi latérale cylindrique 36 de l'organe tubulaire borgne 31 de celle-ci, en étant sensiblement à égale distance de cet organe tubulaire 25 et de cette paroi latérale cylindrique 36.

En pratique, la tranche libre 43 de l'organe tubulaire borgne 27, c'est-à-dire la tranche de la paroi latérale cylindrique 42 de celui-ci opposée à celle par laquelle il est solidarisé au fond 28 associé, est à distance du fond 32 de l'organe tubulaire 31 de l'électrode d'entrée 20.

Dans la forme de réalisation représentée, cette tranche libre 43 est dentelée, suivant une découpe par exemple triangulaire, tel que représenté.

Comme précédemment, le fond 28 des organes tubulaires 27, 30 de l'électrode de sortie 19 est à distance de la tranche libre de l'organe tubulaire central 25 et de la paroi latérale cylindrique 36 de l'organe tubulaire borgne 31 de l'électrode d'entrée 20.

De préférence, et tel que représenté, sur ce fond 20 fait saillie, du côté de l'organe tubulaire central 25 de l'électrode d'entrée 20, et dans l'axe de celui-ci, une pointe métallique 45.

Il s'agit, en pratique, d'une pointe relativement massive, dont la base est sensiblement complémentaire du contour intérieur de la paroi latérale cylindrique 42 de l'organe tubulaire borgne 27 de l'électrode de sortie 19, et dont l'extrémité est sensiblement à niveau avec l'extrémité supérieure 29 de l'organe tubulaire central 25 de l'électrode d'entrée 20, avec, entre ladite base et ladite extrémité, une paroi latérale de révolution à méridien courbe à concavité dirigée vers l'extérieur.

Contrairement à la paroi latérale cylindrique 42 de son organe tubulaire borgne 27, la paroi latérale cylindrique 44 de l'organe tubulaire borgne 30 de l'électrode de sortie 19 ne s'étend, dans la forme de réalisation représentée, que sur une portion, relativement réduite, de la hauteur des oganes tubulaires 25 et 31 de l'électrode d'entrée 20.

Mais elle se situe transversalement à une distance de la paroi latérale cylindrique 36 de l'organe tubulaire borgne 31 de cette électrode d'entrée 20 sensiblement égale à celle separant de celle-ci, et de l'organe tubulaire central 25 de la dite électrode d'entrée 20, la paroi latérale cylindrique 42 de l'organe tubulaire borgne 27 auquel elle est associée.

Par une potence 47 solidarisée, par exemple paroi soudage, au fond 28 de ses organes tubulaires 27, 30, sur la face extérieure de ce fond 28, l'électrode de sortie 19 ainsi constituée est rapportée sur un flasque 48, et, comme précédemment, celui-ci porte en saillie, pour la fixation de l'ensemble à la cloison longitudinale 22 concernée de la superstructure 21, plusieurs goujons filetés 49, dont un forme la borne 14A correspondante.

Il résulte de ce qui précède que, en raison de l'imbrication relative de leurs organes tubulaires respectifs, le volume de circulation 24 que forment entre elles les deux électrodes 19, 20 constitue par lui-même des moyens de chicane pour l'électrolyte 18, cet électrolyte 18 se voyant imposé, dans ce volume de circulation 24, un trajet en zigzag, alternativement axialement dans un sens, puis dans le sens opposé, par contournement de la tranche libre de certains au moins des organes tubulaires constitutifs desdites électrodes 19, 20.

Il résulte également de ce qui précède que ce volume de circulation 24 constitue aussi, par lui-même, pour l'électrolyte 18, une capacité de retenue 54.

De manière plus précise, cette capacité de retenue se trouve définie par l'organe tubulaire borgne 31 de l'électrode d'entrée 20, par confinement entre cet organe tubulaire borgne 31 et l'organe tubulaire central 25 qu'entoure celui-ci.

A cette capacité de retenue 54 il est associé des moyens d'évacuation propres à en mesurer de manière contrôlée la vidange.

Dans la forme de réalisation représentée, ces moyens d'évacuation comportent un clapet 55, qui est disposé à la partie basse de la capacité de retenue 54, et dont le clapet mobile 56 est adapté à coopérer avec un siège de clapet fixe 57 formé par la tranche d'un embout fileté 58 rapporté par vissage dans un perçage taraudé 59 ménagé à cet effet dans le fond 32 de l'organe tubulaire borgne 31 de l'électrode d'entrée 20, figure 3.

Le clapet mobile 56 est soumis à des moyens de commande.

Il s'agit, tout d'abord, de moyens élastiques de rappel, en l'espèce un ressort 60, du type ressort à boudin, qui, prenant appui sur une potence 61 rapportée par soudage sur la face interne du fond 32, sollicitent en permanence en fermeture ledit clapet mobile 56 en agissant sur lui dans le sens pour lequel il est apte à s'appliquer au siège de clapet fixe 57 auquel il est associé.

Il s'agit, ensuite, ledit clapet mobile 56 étant en pratique porté par un fût 61, qui, disposé sensiblement coaxialement par rapport à l'embout 58 formant son siège de clapet fixe 57, fait saillie vers le bas hors dudit embout 58, d'une biellette 63, figure 2, calée en rotation sur un arbre de commande 64, figure 1.

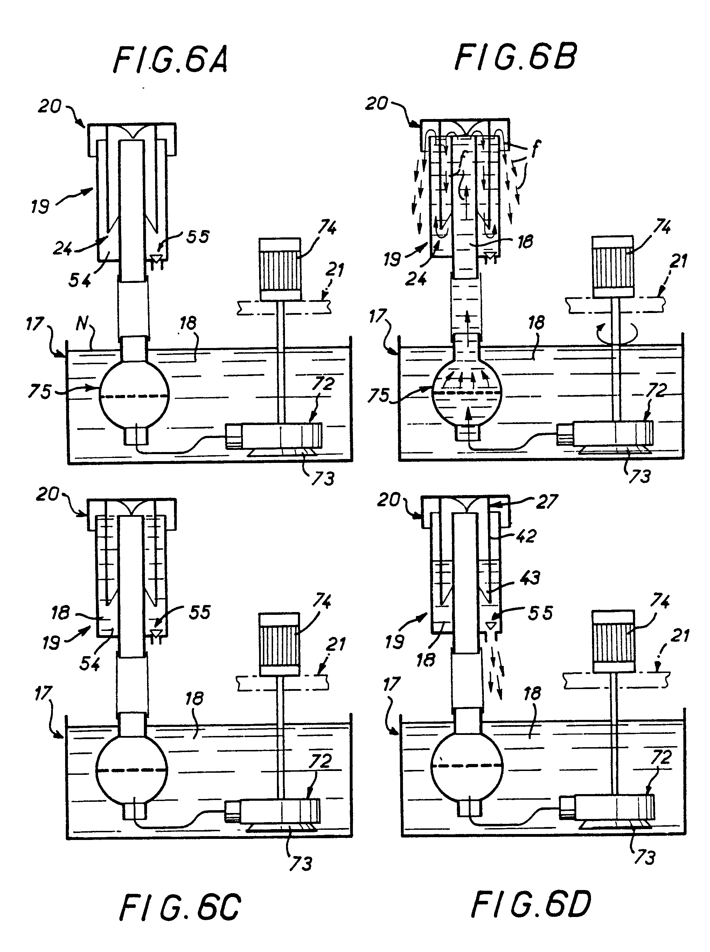

A l'une de ses extrémités, cet arbre 64 porte une biellette 65, sur laquelle peut agir, figures 1 et 5, le noyau plongeur 66 d'un électro-aimant de commande 67.

Cet électro-aimant 67 est porté par une semelle 68, et celle-ci, par exemple par un montage à boutonnière 69, tel que représenté, figure 5, est montée mobile verticalement sur un flasque de support 70, lui-même fixé à la cloison longitudinale 22 de la superstructure 21 suivant des modalités non représentées sur les figures.

Le contrôle de position de l'électro-aimant 67 est assuré par une tige de commande 71, qui est attelée à la semelle 68 qui le porte, et qui, blocable en position suivant des modalités qui, relevant de l'homme de l'art, ne seront pas décrites en détail ici, est à la disposition de l'usager.

L'arbre 64, qui s'étend parallèlement aux cloisons longitudinales de la superstructure 21, tout en étant monté à tourillonnement dans les cloisons transversales 23 de celle-ci, est commun à l'ensemble des phases A, B, C, ledit arbre 64 portant de place en place des biellettes 63, une pour chacune de ces phases A, B, C.

Dans la forme de réalisation représentée, les électrodes 19, 20 des diverses phases A, B, C ont en commun la cuve à électrolyte 17.

Elles ont en outre en commun les moyens de pulsion propres à la circulation d'un flux d'électrolyte 18 dans leur volume de circulation 24.

Dans la forme de réalisation représentée, ces moyens de pulsion sont constitués par une pompe 72, à ouïe d'aspiration 73, immergée dans la cuve à électrolyte 17, et commandée en rotation par un moteur 74 extérieur à celle-ci.

De préférence, et tel que représenté, entre les électrodes 19, 20 des phases A, B, C et cette pompe 72 est interposé un distributeur 75.

Dans la forme de réalisation plus particulièrement illustrée par la figure 1, ce distributeur 75 se présente sous la forme d'un cylindre, qui est allongé sensiblement horizontalement dans la cuve à électrolyte 17, et dont les extrémités sont fermées.

Le volume interne de ce cylindre est partagé en deux compartiments par une cloison 76, qui s'étend sensiblement suivant son plan diamétral horizontal, et qui, de place en place, est ajourée par des perforations 77, à savoir un compartiment inférieur 78 et un compartiment supérieur 79.

Par un embout 80 situé à sa partie basse, sensiblement dans sa zone médiane, et par une canalisation souple 82, le compartiment inférieur 78 est relié à la sortie 83 de la pompe 72.

Par des embouts 84, qui sont établis de place en place à sa partie haute, et au droit desquels la plaque 76 ne comporte pas de perforations 77, et par des manchons en matière isolante 85, le compartiment supérieur 79 est relié à l'organe tubulaire central 25 de l'électrode d'entrée 20 des diverses phases A, B, C, par emmanchement d'un tel manchon 85 sur l'embout de raccordement que forme dans ce but l'extrémité inférieure 34 d'un tel organe tubulaire central 25.

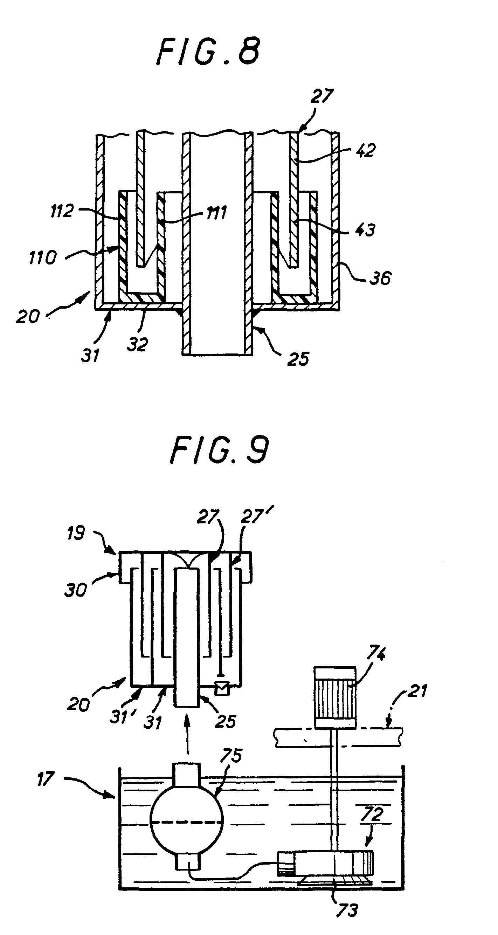

Dans la variante de réalisation représentée à la figure 7, le cylindre constituant le distributeur 75 est creux, son manchon d'entrée 80 étant simplement implanté dans la zone centrale d'un de ses fonds, tandis que ses manchons de sortie 84 sont repartis circulairement autour de son axe, sur l'autre de ceux-ci.

Enfin, aux électrodes 19, 20 de chacune des phases A, B, C est associé un contact mobile 86 propre à les relier électriquement l'une à l'autre, pour leur mise hors service.

Dans la forme de réalisation représentée, et tel qu'il est mieux visible pour l'un d'eux sur la figure 4, chacun des contacts mobiles 86 que comporte ainsi le rhéostat à résistance liquide 16 suivant l'invention est monté coulissant sur une tige de commande 87, entre deux épaulements 88, 89 de celle-ci, et il est destiné à coopérer avec des contacts fixes 91, 92 portes, le premier, par la potence 47 de l'électrode de sortie 19 de la phase A, B, C concernée, et, le deuxième, par l'un des bras de support 37 de l'électrode d'entrée 20 correspondante.

De manière plus précise, dans cette forme de réalisation, la tige de commande 87 est une tige filetée, sur laquelle est montée coulissante, pour chaque phase A, B, C, une douille 90 portant le contact mobile 86 concerné, et ses épaulements 88, 89 sont formés sur deux ecrous engagés à vissage sur elle.

Bien entendu, à chacun de ces ecrous peut être associé un contre-écrou, pour son blocage en position.

Par des moyens élastiques d'appui, en l'espèce un ressort à boudin 93 qui prend appui sur l'écrou formant l'épaulement 89 de la tige de commande 87, chaque contact mobile 86 est en permanence sollicité en direction de l'autre épaulement 88 de celle-ci, c'est-à-dire l'épaulement de ladite tige de commande 87 le plus proche des contacts fixes 91, 92.

Ainsi qu'il est aisé de le comprendre, l'écrou formant l'épaulement 88 assure une limitation à la course du contact mobile 86 et celui formant l'épaulement 89 permet un réglage de la compression du ressort 93.

La tige de commande 87, qui s'étend longitudinalement, parallèlement aux cloisons longitudinales 22 de la superstructure 21, en traversant à coulissement les cloisons transversales 23 de celle-ci, à la faveur de douilles 95 rapportées à cet effet sur ces cloisons transversales 23, est commune à l'ensemble des phases A, B, C, cette tige de commande 87 portant, de place en place, suivant les modalités décrites ci-dessus, des contacts 86, un pour chacune desdites phases A, B, C.

Ainsi qu'il est visible à la figure 1, la tige de commande 87 est soumise à des moyens de commande en va-et-vient 96 par l'intermédiaire d'un levier coudé 97, en sorte que les dits moyens de commande en va-et-vient 96 s'étendent globalement transversalement par rapport à son axe.

Autrement dit, ces moyens de commande en va-et-vient 96, qui, en pratique, sont implantés à l'extérieur de la superstructure 21, s'étendent parallèlement à l'une des cloisons transversales d'extrémité 23 de celle-ci, en étant portés par cette cloison transversale 23, et, de ce fait, ils se logent sous un encombrement minimal.

Ces moyens de commande en va-et-vient 96 comportent un pantographe 98, ou parallélogramme articulé, dont un sommet, le sommet 100, est fixe tandis que le sommet opposé, le sommet 101, est formé par une noix à laquelle est articulé, par son coude, le levier coudé 97.

Par l'une de ses branches, ce levier coudé 97 est en prise avec la tige de commmande 87 des contacts mobiles 86, et, par son autre branche, il est articulé à une chape fixe 102.

Un ressort 103, tendu entre les sommets 100, 101 du pantographe 98, tend en permanence à rapprocher du sommet fixe 100 le sommet 101 auquel est articulé le levier coudé 97, cependant que les autres sommets 104, 105 de ce pantographe 98 sont chacun soumis a un électro-aimant de commande 106, 107 propre à en assurer de manière synchrone un rapprochement l'un par rapport à l'autre, à l'encontre dudit ressort 103.

Lorsque, en dehors de ses interventions, le rhéostat à résistance liquide 16 suivant l'invention est en attente, les électrodes 19, 20 de chacune de ses phases A, B, C sont à distance de l'électrolyte 18 contenu dans la cuve à électrolyte 17, tel que schématisé à la figure 6A pour l'une de ces phases A, B, C.

Conjointement, le clapet 55 contrôlant la capacité de retenue 54 que forment entre elles de telles électrodes 19, 20 est en position de fermeture.

En outre, les électro-aimants 106, 107 commandant le pantographe 98 sont alors désexcités, en sorte que le ressort 103 maintient ce pantographe dans une position rétractée, pour laquelle, par le levier coudé 97, la tige de commande 87, elle-même alors en position reculée, maintient chaque contact mobile 86, par son épaulement 88 correspondant, à distance des contacts fixes 91, 92 auxquels un tel contact mobile 86 est associé.

Pour le démarrage du moteur 11, le moteur 74 est mis en route, figure 6B.

Il en résulte que, par l'intermédiaire du distributeur 75, la pompe 72 dirige un flux d'électrolyte 18 vers le volume de circulation 24 que forment également entre elles ces électrodes 19, 20.

Comme décrit ci-dessus, avant de retomber par gravité dans la cuve à électrolyte 17, ce flux d'électrolyte 18 balaye en zigzag un tel volume de circulation 24, suivant les flèches f de la figure 6B.

Bien entendu, l'envahissement du volume de circulation 24 par l'électrolyte 18 est progressif, ce qui assure la progressivité du démarrage recherché pour le moteur 11, sous le contrôle, par exemple, du débit de la pompe 72, et, éventuellement, d'un débit d'évacuation assuré par le clapet 55 en commandant en conséquence en ouverture celui-ci.

Ainsi qu'on le notera, le flux d'électrolyte 18 entrant par l'organe tubulaire central 25 de l'électrode d'entrée 20, le passage initial de courant entre cette électrode d'entrée 20 et l'électrode de sortie 19 se fait par l'intermédiaire de la pointe 45, ce qui ménage avantageusement les parties concernées desdites électrodes 19, 20.

Lorsque le démarrage du moteur 11 est terminé, le moteur 74 est arrêté, figure 6C.

La capacité de retenue 54 formée entre les électrodes 19, 20 de chaque phase A, B, C reste alors momentanément envahie d'électrolyte 18, si, comme représenté, le clapet 55 est laissé en position de fermeture.

Par excitation des électro-aimants 106, 107, le pantographe 98 passe en position déployée, et les contacts mobiles 86 sont alors plaqués contre les contacts fixes 91, 92 auxquels ils sont associés, ce qui met hors service les électrodes 19, 20.

La consommation correspondante des électro-aimants 106, 107 est en pratique relativement faible, la position déployée concernée du pantographe 98 étant proche de sa position d'équilibre.

Quoi qu'il en soit, grâce au volume d'électrolyte 18 contenu dans la capacité de retenue 54 que forment les électrodes 19, 20, la fermeture des contacts mobiles 86 n'entraîne avantageusement aucun appel de courant.

Tel que schématisé à la figure 6D, la vidange de cette capacité de retenue 54 est ensuite assurée, par ouverture du clapet 55.

Ainsi qu'il est aisé de le comprendre, une telle vidange peut aussi être mise en oeuvre, à l'arrêt du moteur 11, pour assurer une décélération contrôlée de celui-ci.

Dans tous les cas, par réglage en hauteur de la semelle 68 portant l'électro-aimant 87 auquel est assujetti en commande le clapet 55, il est possible d'ajuster à toute valeur désirée le débit de vidange correspondant.

Au terme d'une telle vidange, la tranche crénelée 43 de la paroi latérale cylindrique 42 de l'organe tubulaire 27 de l'électrode de sortie 19, par laquelle se fait le passage ultime de courant entre cette électrode de sortie 19 et l'électrode d'entrée 20, assure, par ses dents, une progressivité de l'interruption correspondante d'un tel passage de courant, ce qui évite avantageusement tout risque d'amorçage d'arc.

Dans la variante de réalisation illustrée par la figure 8, il est prévu, dans le même but, posée en saillie sur le fond 32 de l'organe tubulaire 31 de l'électrode d'entrée 20, une coupelle annulaire 110, qui est en matière isolante, et qui présente, annulairement, deux cloisons coaxiales 111, 112, chacune insérées entre deux organes tubulaires successifs des électrodes 19, 20, à savoir, pour la première, l'organe tubulaire central 25 de l'électrode d'entrée 20 et la paroi latérale cylindrique 42 de l'organe tubulaire borgne 27 de l'électrode de sortie 19, et pour la seconde, cette paroi latérale cylindrique 42 et la paroi latérale cylindrique 36 de l'organe tubulaire borgne 31 de l'électrode d'entrée 20.

En fin de vidange de la capacité de retenue 54 que forment entre elles les électrodes 19, 20, cette coupelle annulaire 110 assure avantageusement une brusque augmentation de résistance, en sorte que le courant passant d'une de ces électrodes à l'autre s'effondre alors brutalement, sans risque d'un quelconque amorçage d'arc entre celles-ci.

La coupelle annulaire 110 ainsi mise en oeuvre n'a aucune influence à la mise sous tension, le courant entre les électrodes 19, 20 s'établissant à l'extrémité opposée de l'organe tubulaire central 25 de l'électrode d'entrée 20, comme décrit ci-dessus.

Dans la variante de réalisation illustrée par la figure 9, l'électrode d'entrée 20 comporte, en sus de son organe tubulaire central 25, et en anneaux successifs autour de celui-ci, deux organes tubulaires borgnes 31, 31', et, corollairement, l'électrode de sortie 19 comporte, en anneaux, en alternance avec les précédents, trois organes tubulaires borgnes 27, 27', 30, ce qui augmente l'extension des moyens de chicane que forment ainsi entre elles de telles électrodes 19, 20.

Bien entendu, le nombre des organes tubulaires que présente l'une et/ou l'autre de celles-ci est en réalité quelconque.

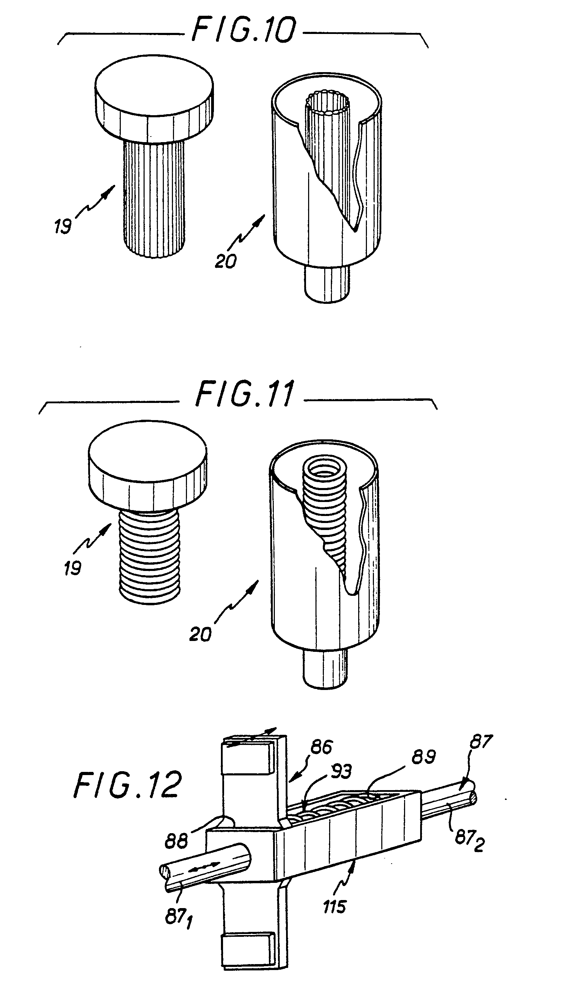

Les électrodes 19, 20, ou l'une au moins d'entre elles, peuvent aussi être au moins en partie faites d'un assemblage longitudinal de fils ou de tubes, ce qui, compte tenu de l'arrondi que présente la section transversale de tels fils ou tubes, conduit à une augmentation avantageuse de leur surface d'échange; cette possibilité est illustrée par la figure 10.

Elles peuvent également être faites par roulage de tels fils ou tubes; cette possibilité est illustrée par la figure 11.

Dans l'un et l'autre cas, s'il s'agit de tubes, ils peuvent être avantageusement mis en oeuvre pour la circulation d'un réfrigérant.

Suivant une autre variante, les électrodes 19, 20 ou l'une au moins d'entre elles, peuvent être au moins en partie en métal déployé, à l'exclusion, évidemment, de leur enveloppe externe.

Il est alors avantageusement associé deux fonctions d'une part la surface d'échange se trouve augmentée, ce qui à courant égal, permet d'écarter l'une de l'autre les électrodes, et donc de monter en tension, le seuil de la tension critique d'amorçage se trouvant reculé; et, d'autre part, il est offert à l'électrolyte deux voies de circulation, l'une entre les électrodes, comme précéjemment, l'autre à travers les parois de ces électrodes, ce qui favorise avantageusement le dégazage de cet électrolyte, c'est-à-dire l'entraînement des micro-bulles prenant naissance à son contact avec lesdites électrodes.

Suivant une autre variante, les électrodes 19, 20, ou l'une au moins d'entre elles, sont réalisées par moulage ou matriçage.

Il est possible, par ailleurs, de disposer entre elles, sur toute leur hauteur, deux parois en matière isolante, formant écran, qui sont, l'une fixe, l'autre mobile et réglable en position, et qui présentent l'une et l'autre des ouvertures superposables lorsque ces ouvertures se trouvent décalées, il y a isolation, et lorsqu'elles se trouvent en vis-à-vis, il y a conduction; il est ainsi avantageusement possible de régler la capacité d'échange entre les électrodes, indépendamment du bain.

Ces contacts mobiles 86 sont par ailleurs de préférence démontables.

Par exemple, leur tige de commande étant tronçonnée à cet effet, chacun d'eux peut être porté de manière amovible par une chape en forme de cadre, qui, remplaçant les écrous formant les épaulements correspondants de cette tige de commande, relie deux tronçons successifs de celle-ci, un tel contact mobile étant alors engagé dans une telle chape en étant guidé par les bords de celle-ci.

Cette possibilité est illustrée par la figure 12, où l'on voit en 115 la chape formant cadre, qui relie deux tronçons $87_1$, $87_2$ de la tige de commande 87, en formant par elle-même les épaulements 88, 89 de celle-ci.

Le contact mobile 86 est en prise par des picots latéraux 116 avec les bords de cette chape 115; pour le démonter, il suffit de le faire pivoter, puis de le dégager vers le haut ou vers le bas.

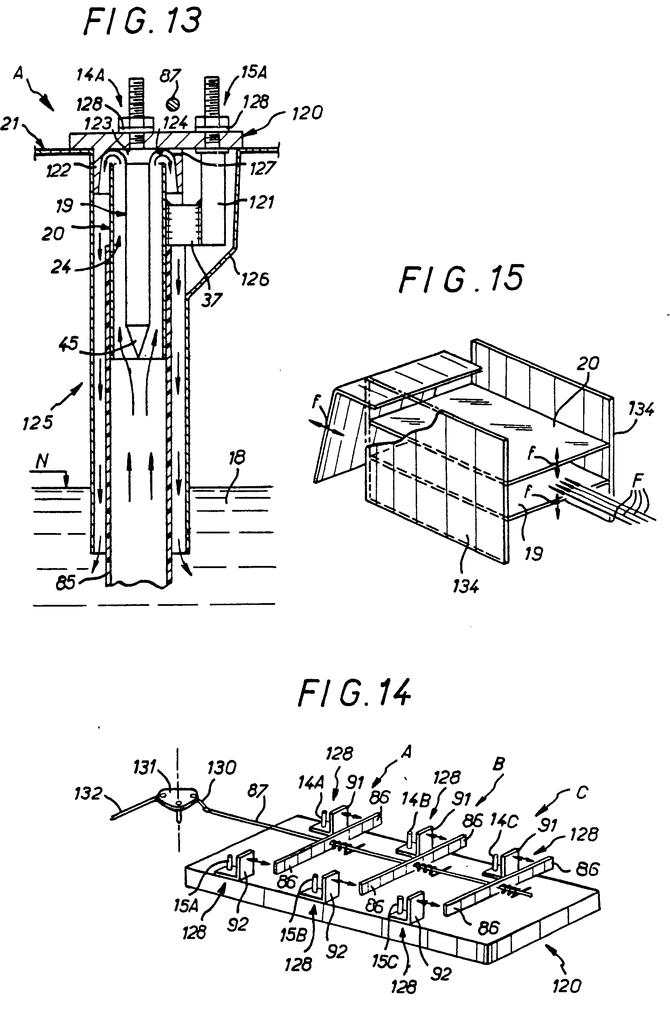

Dans la variante de réalisation illustrée par la figure 13, l'électrode de sortie 19 de chaque phase se réduit à une simple tige, terminée de préférence par une pointe 45, tel que représenté et l'électrode d'entrée 20 associée se réduit elle-même à un simple tube disposé annulairement autour de ladite tige, à distance de celle-ci.

L'électrode de sortie 19 est directement portée par une platine 120 reposant sur la superstructure 21, à la partie supérieure de celle-ci.

Elle est suspendue à cette platine 120, et la borne 14A associée en forme simplement un prolongement fileté qui traverse celle-ci.

L'électrode d'entrée 20 est elle aussi portée par la platine 120, ladite électrode d'entrée 20 étant reliée par un bras 37 à une tige 121, qui, comme celle formant l'électrode de sortie 19, et parallèlement à celle-ci, est suspendue à la dite platine 120, et dont un prolongement fileté traverse cette dernière pour former la borne 150 correspondante.

Autour de l'électrode d'entrée 20, la platine 120 présente, en saillie sur sa surface inférieure, un prolongement tubulaire 122, qui forme intérieurement, autour de l'électrode de sortie 19, avec une bague 123 formant le pied de celle-ci, une surface torique arrondie 124 contournant la tranche correspondante de ladite électrode d'entrée 20.

La superstructure 121 comporte, elle-même, dans cette variante de réalisation, autour du prolongement tubulaire 122 précédent, une cheminée de guidage 125, en matière isolante, dans laquelle est emboîté ledit prolongement tubulaire 122, et qui, coaxiale des électrodes 19, 20, plonge, elle, dans l'électrolyte 18 contenu dans la cuve sous-jacente 17.

Latéralement, cette cheminée de guidage 125 comporte un bossage 126, pour le passage du bras 37 portant l'électrode d'entrée 20 et l'implantation de la tige 121 correspondante.

Au droit de ce bossage 126, le prolongement tubulaire 122 est, de préférence, et tel que représenté, traversé de part en part par au moins un évent 127.

La pointe 45 de l'électrode de sortie 19 est sensiblement à niveau avec la tranche correspondante de l'électrode d'entrée 20 et sur cette dernière est engagé, pour son raccordement aux moyens de pulsion associés, qui sont du type de ceux décrits précédemment, un manchon en matière isolante 85.

Outre les électrodes 19, 20 et les bornes 14, 15 de chaque phase A, B, C, la platine 120 porte également les contcts mobiles 86 et les contacts fixes 91, 92 correspondants, dans cette variante de réalisation, tel que schématisé sur la figure 14.

Ces contacts fixes 91, 92 sont directement en liaison électrique avec les bornes 14, 15 concernées, lesdits contacts fixes 91, 92 étant chacun portés par l'une des ailes d'une équerre 128 dont l'autre aile, appliquée à la platine 120, est traversée par le prolongement fileté formant la borne 14, 15 correspondante, et, suivant des dispositions du type de celles décrites précédemment, les contacts mobiles 86 sont soumis à une tige de commande 87.

A son extrémité, celle-ci est attelée par une biellette 130 a un renvoi d'angle 131, qui est monté pivotant autour d'un axe parallèle aux électrodes 19, 20, et auquel est attelé le noyau plongeur 132 d'un électro-aimant de commande, non représenté, dont l'axe s'étend ainsi transversalement par rapport à l'axe de la tige de commande 87.

Ainsi, dans cette variante de réalisation, au lieu d'être disposé latéralement dans la même enceinte que les électrodes, l'ensemble formé par les divers contacts et leur commande est avantageusement disposé à la partie supérieure de la superstructure 21, au-dessus de la platine portant lesdites électrodes; l'accessibilité à cet ensemble et son isolement par rapport à l'électrolyte 18 s'en trouve favorisée.

En outre, un seul électro-aimant suffit alors à la commande des contacts mobiles, et, par une configuration appropriée du renvoi d'angle 131 et une implantation appropriée de son axe de rotation et des points d'attelage de la biellette 130 et du noyau plongeur 132 qui y sont articulés, il est fait en sorte que, au collage, c'est-à-dire lorsque les ressorts associés à ces contacts mobiles sont sous contrainte maximale, l'effort résistant sur ledit noyau plongeur est minimal, voire nul, ce qui permet de minimiser la taille de l'électro- aimant de commande à mettre en oeuvre et la tension critique de décollage due à d'éventuelles baisses de tension accidentelles.

En service, et tel que schématisé par des flèches sur la figure 13, l'électrolyte 18 n'effectue un parcours que dans un sens, en pratique, le sens ascendant, entre les électrodes 19, 20, dans le volume de circulation 24 défini entre celles-ci, avant de retomber par gravité dans la cuve sous-jacente, en étant alors convenablement confiné par la cheminée de guidage 125.

Ainsi qu'on le comprendra, cette cheminée de guidage 125, du fait qu'elle plonge dans l'électrolyte 18 présent dans la cuve sous-jacente, augmente en correspondance le cheminement électrique entre les pièces sous tension.

Par ailleurs l'égouttage de l'électrolyte 18 se trouve amélioré, seul le bras 37 interférant sur son trajet, et le ou les évents 127 permettent d'éviter toute accumulation de gaz éventuelle dans les prolongements tubulaires 122 de la platine 120.

En pratique, cette variante de réalisation convient tout particulièrement aux appareils de petite puissance pour lesquels un encombrement minimal est recherché.

Bien entendu, l'invention n'est pas du tout limitée au cas où, tel que plus particulièrement décrit ci-dessus, les électrodes mises en oeuvre sont annulaires ou cylindriques.

Elle s'étend au contraire aussi bien au cas où il s'agit de simples plaques parallèles les unes aux autres.

Cette possibilité est illustrée de manière schématique à la figure 15.

Tel que schématisé par des doubles flèches $\underline{f}$, deux plaques métalliques parallèles, l'une formant l'électrode d'entrée 20, l'autre formant l'électrode de sortie 19, sont montées mobiles parallèlement à elles-mêmes, entre deux flasques en matière isolante 134.

Dans un tel cas, et tel que schématisé par les flèches F, l'électrolyte mis en oeuvre est projeté entre ces plaques, par exemple par un tube de forme image du volume délimité entre elles et les flasques 134, et il est dès lors possible de procéder à un réglage du courant par un réglage de la distance séparant l'une de l'autre de telles plaques, en sus ou en substitution au réglage possible en agissant sur la conductibilité de l'électrolyte.

A l'arrière, un déflecteur 135, lui-même réglable en position, assure la mise en charge de l'électrolyte dans le volume délimité entre les électrodes et les flasques 134, en freinant sa sortie.

La présente invention ne se limite d'ailleurs pas aux formes de réalisation décrites et représentées, mais englobe toute variante d'exécution, notamment en ce qui concerne les moyens de commande du clapet assurant le contrôle de la capacité de retenue formée entre les électrodes d'une même phase, aussi bien qu'en ce qui concerne les moyens propres au réglage de ces moyens de commande, lorsqu'une telle capacité de retenue est prévue.

En toute hypothèse, l'implantation en ligne des électrodes n'est pas impérative; elle peut tout aussi bien se faire en triangle par exemple.

De plus, pour la circulation recherchée de l'électrolyte, d'autres moyens de pulsion que ceux constitués par une simple pompe peuvent être mis en oeuvre, et/ou il peut être associé des moyens de pulsion individuels pour chacune des phases concernées.

En outre, si, lorsque, comme décrit, des manchons sont mis en oeuvre pour matérialiser une liaison entre de tels moyens de pulsion et le volume de circulation formé par les électrodes d'une même phase, il importe que ces manchons soient en matière isolante, de tels manchons ne sont pas réellement indispensables.

Il peut suffire, en effet, de procéder à l'envahissement d'un tel volume de circulation par un simple jet d'électrolyte convenablement dirigé dans l'axe de l'organe tubulaire central qui y donne accès.

C'est la raison pour laquelle un tel manchon n'a pas été représenté sur la figure 9.

Dans un tel cas, il existe une réelle césure entre les électrodes et les moyens de pulsion qui leur sont associés, étant entendu que, lorsqu'un manchon est mis en oeuvre, ce manchon constitue par lui-même une césure isolante entre de telles électrodes et de tels moyens de pulsion, tout en s'opposant avantageusement à la pénétration d'air dans le flux d'électrolyte qu'il canalise.

En toute hypothèse, ce flux d'électrolyte peut pénétrer aussi bien par le haut que par le bas dans le volume de circulation prévu pour lui entre deux électrodes, et, d'ailleurs, sa direction à son entrée dans ce volume de circulation n'est pas nécessairement verticale, les électrodes ne s'étendant par exemple pas nécessairement verticalement bien qu'une telle orientation soit plus favorable à une simple vidange par gravité de la capacité de retenue éventuellement formée entre elles.

Les contacts mis en oeuvre, par ailleurs, au lieu d'être disposés dans la même enceinte que les électrodes, comme représenté, peuvent avantageusement être disposés à l'extérieur de celle-ci, ce qui les rend plus accessibles et les protége de l'humidité.

Enfin, pour la constitution d'un rhéostat antidéflagrant, les électrodes, au lieu de baigner dans l'air ambiant, peuvent baigner dans un gaz neutre ou un liquide diélectrique non miscible à l'eau tel que le silicone, l'enceinte qui les renferme étant alors conditionnée de manière étanche en conséquence.

Bien entendu, lorsqu'il s'agit d'un liquide, il envahit en période d'inactivité la capacité de retenue que forment entre elles les électrodes lorsqu'une telle capacité de retenue est prévue, mais il s'en trouve chassé temporairement par l'électrolyte en service, avant de la regagner par exemple par gravité.

**Revendications**

1. Rhéostat à résistance liquide, du genre comportant, d'une part, une cuve (17) contenant de l'électrolyte (18), et, d'autre part, au moins deux électrodes (19, 20), qui, établies à distance l'une de l'autre, sont destinées à être reliées l'une à une source d'alimentation électrique (10), l'autre à l'appareil (11) à desservir par celle-ci, caractérisé en ce que les dites électrodes (19, 20) définissent entre elles un volume de circulation (24) pour l'électrolyte (18) et il leur est associé des moyens de pulsion (72) propres à assurer de manière contrôlée une circulation effective d'un flux d'électrolyte (18) entre elles.

2. Rhéostat à résistance liquide suivant la revendication 1, caractérisé en ce que le volume de circulation (24) que forment entre elles les deux électrodes (19, 20) constitue par lui-même des moyens de chicane pour l'électrolyte (18).

3. Rhéostat à résistance liquide suivant la revendication 1, caractérisé en ce que le volume de circulation (24) que forment entre elles les deux électrodes (19, 20) constitue par lui-même une capacité de retenue (54) pour l'électrolyte (18), et à ladite capacité de retenue (54) il est associé des moyens d'évacuation propres à en assurer de manière contrôlée la vidange.

4. Rhéostat à résistance liquide suivant la revendication 1, caractérisé en ce que les deux électrodes (19, 20) sont l'une et l'autre globalement annulaires et elles sont établies sensiblement coaxialement l'une par rapport à l'autre.

5. Rhéostat à résistance liquide suivant la revendication 4, caractérisé en ce que l'une (20) au moins des électrodes, dite ici par simple commodité électrode d'entrée, comporte un organe tubulaire central (25), qui est ouvert à ses deux extrémités, pour entrée du flux d'électrolyte (18), tandis que l'autre (19), dite ici par simple commodité électrode de sortie, comporte au moins un organe tubulaire borgne (27), qui est engagé, avec jeu, sur l'organe tubulaire central (25) de l'électrode d'entrée (20).

6. Rhéostat à résistance liquide suivant la revendication 5, caractérisé en ce que, les électrodes (19, 20) étant disposées verticalement, l'organe tubulaire borgne (27) de l'électrode de sortie (19) a son fond (28) du côté de l'extrémité supérieure de l'organe tubulaire central (25) de l'électrode d'entrée (20).

7. Rhéostat à résistance liquide suivant l'une quelconque des revendications 5, 6, caractérisé en ce que, sur le fond (28) de l'organe tubulaire borgne (27) de l'électrode de sortie (20), fait saillie, du côté de l'organe tubulaire central (25) de l'électrode d'entrée (20), et dans l'axe de celui-ci, une pointe (45).

8. Rhéostat à résistance liquide suivant l'une quelconque des revendications 5 à 7, caractérisé en ce que la tranche libre (43) de l'organe tubulaire borgne (27) de l'électrode de sortie (19) est dentelée.

9. Rhéostat à résistance liquide suivant l'une quelconque des revendications 5 à 8, caractérisé en ce que l'électrode de sortie (19) comporte successivement en anneaux au moins deux organes tubulaires borgnes (27, 27', 30), et, en alternance avec ceux-ci, l'électrode d'entrée (20) comporte elle-même, autour de son organe tubulaire central (25), au moins un organe tubulaire borgne (31, 31').

10. Rhéostat à résistance liquide suivant les revendications 3 et 9, prises conjointement, caractérisé en ce que la capacité de retenue (24) que forment entre elles les deux électrodes (19, 20) est definie par le ou les organes tubulaires borgnes (31, 31') de l'électrode d'entrée (20).

11. Rhéostat à résistance liquide suivant l'une quelconque des revendications 3, 10, caractérisé en ce que les moyens d'évacuation associés à la capacité de retenue (24) comportent un clapet (55), qui est disposé à la partie basse de ladite capacité de retenue (24), et dont le clapet mobile (56) est soumis à des moyens de commande.

12. Rhéostat à résistance liquide suivant la revendication 9, caractérisé en ce que sur le fond (32) d'un organe tubulaire borgne (31) de l'électrode d'entrée (20) fait saillie une coupelle annulaire (110), qui est en matière isolante, et qui présente annulairement au moins deux cloisons coaxiales (111, 112), chacune insérées entre deux organes tubulaires successifs de ladite électrode d'entrée (20) et de l'électrode de sortie (19).

13. Rhéostat à résistance liquide suivant la revendication 1, caractérisé en ce que l'une des électrodes (19) se réduit à une tige, de préférence terminée par une pointe (45), et l'autre (20) se réduit elle-même à un tube disposé annulairement autour de ladite tige.

14. Rhéostat à résistance liquide suivant la revendication 13, caractérisé en ce que les électrodes (19, 20) sont entourées par une cheminée de guidage (125), en matière isolante, qui plonge dans l'électrolyte contenu dans la cuve (17).

15. Rhéostat à résistance liquide suivant l'une quelconque des revendications 1 à 14, caractérisé en ce que, aux électrodes (19, 20), est associé un contact mobile (86) propre à les relier électriquement l'une à l'autre, pour leur mise hors service.

16. Rhéostat à résistance liquide suivant la revendication 15, caractérisé en ce que ledit contact mobile (86) est monté coulissant sur une tige de commande (87) elle-même montée mobile en va-et-vient suivant son axe, et, par des moyens élastiques d'appui (93), il est en permanence sollicité en direction d'un épaulement (88) de ladite tige de commande (87).

17. Rhéostat à résistance liquide suivant la revendication 16, caractérisé en ce que la tige de commande (87) du contact mobile (86) est soumise à des moyens de commande en va-et-vient s'étendant globalement transversalement par rapport à son axe.

18. Rhéostat à résistance liquide suivant l'une quelconque des revendications 1 à 17, caractérisé en ce que plusieurs phases (A, B, C) à deux électrodes (19, 20) étant mises en oeuvre, elles ont en commun la cuve à électrolyte (17).

19. Rhéostat à résistance liquide suivant la revendication 18, caractérisé en ce que les diverses phases (A, B, C) ont également en commun les moyens de pulsion (72) propres à la circulation d'un flux d'électrolyte (18) entre leurs électrodes (19, 20), avec, entre lesdites électrodes et lesdits moyens de pulsion (72), un distributeur (75).

20. Rhéostat à résistance liquide suivant l'une quelconque des revendications 1 à 19, caractérisé en ce que, en attente, avant intervention, les électrodes (19, 20) sont à distance de l'électrolyte (18).

21. Rhéostat à résistance liquide suivant l'une quelconque des revendications 1 à 20, caractérisé en ce qu'il existe une césure, au moins isolante, entre les électrodes (19, 20) et les moyens de pulsion (72) qui leur sont associés.

**Patentansprüche**

1. Flüssigkeits-Regelwiderstand des Typs, der einerseits einen den Elektrolyten (18) enthaltenden Behälter (17) und andererseits mindestens zwei Elektroden (19, 20) aufweist, die in einem Abstand voneinander angeordnet und dazu bestimmt sind, daß die eine mit einer elektrischen Stromquelle (10) und die andere mit dem von ihr zu versorgenden Gerät (11) verbunden werden, dadurch gekennzeichnet, daß die Elektroden (19, 20) zwischen sich ein Umlaufvolumen (24) für den Elektrolyten (18) begrenzen und ihnen eine Pulsiervorrichtung (72) zugeordnet ist, die geeignet ist, einen wirksamen Umlauf eines Flusses des Elektrolyten (18) zwischen ihnen in geregelter Weise zu gewährleisten.

2. Flüssigkeits-Regelwiderstand nach Anspruch 1, dadurch gekennzeichnet, daß das Umlaufvolumen (24), welches die zwei Elektroden (19, 20) zwischen sich bilden, als solches eine Umlenkvorrichtung für den Elektrolyten (18) bildet.

3. Flüssigkeits-Regelwiderstand nach Anspruch 1, dadurch gekennzeichnet, daß das Umlaufvolumen (24), welches die zwei Elektroden (19, 20) zwischen sich bilden, selbst eine Rückhaltekapazität (54) für den Elektrolyten (18) bildet und daß dieser Rückhaltekapazität (54) eine Entleerungsvorrichtung zugeordnet ist, die geeignet ist, eine geregelte Entleerung derselben zu gewährleisten.

4. Flüssigkeits-Regelwiderstand nach Anspruch 1, dadurch gekennzeichnet, daß die zwei Elektroden (19, 20) die eine und die andere im ganzen ringförmig und im wesentlichen koaxial zueinander angeordnet sind.

5. Flüssigkeits-Regelwiderstand nach Anspruch 4, dadurch gekennzeichnet, daß mindestens die eine (20) der Elektroden, hier einfach Eingangselektrode genannt, ein an seinen beiden Enden offenes Mittelrohrelement (25) für den Eintritt des Flusses des Elektrolyten (18) aufweist, während die andere Elektrode (19), hier einfach Ausgangselektrode genannt, mindestens ein Blindrohrelement (27) aufweist, das mit Spiel über das Mittelrohrelement (25) der Eingangselektrode (20) eingreift.

6. Flüssigkeits-Regelwiderstand nach Anspruch 5, dadurch gekennzeichnet, daß die Elektroden (19, 20) vertikal angeordnet sind und der Boden (28) des Blindrohrelements (27) der Ausgangselektrode (19) auf der Seite des oberen Endes des Mittelrohrelements (25) der Eingangselektrode (20) angeordnet ist.

7. Flüssigkeits-Regelwiderstand nach einem der Ansprüche 5, 6, dadurch gekennzeichnet, daß eine Spitze (45) vom Boden (28) des Blindrohrelements (27) der Ausgangselektrode (20) auf der Seite des Mittelrohrelements (25) der Eingangselektrode (20) und in dessen Achse vorspringt.

8. Flüssigkeits-Regelwiderstand nach einem der Ansprüche 5 bis 7, dadurch gekennzeichnet, daß die freie Schnittkante (43) des Blindrohrelements (27) der Ausgangselektrode (19) gezackt ist.

9. Flüssigkeits-Regelwiderstand nach einem der Ansprüche 5 bis 8, dadurch gekennzeichnet, daß die Ausgangselektrode (19) als aufeinander folgende Ringe mindestens zwei Blindrohrelemente (27, 27', 30) und abwechselnd mit diesen die Eingangselektrode (20) ihrerseits rings um ihr Mittelrohrelement (25) mindestens ein Blindrohrelement (31, 31') aufweist.

10. Flüssigkeits-Regelwiderstand nach den Ansprüchen 3 und 9, in Verbindung miteinander, dadurch gekennzeichnet, daß die Rückhaltekapazität (24), welche die zwei Elektroden (19, 20) zwischen sich bilden, durch das Blindrohrelement oder die Blindrohrelemente (31, 31') der Eingangselektrode (20) begrenzt ist.

11. Flüssigkeits-Regelwiderstand nach einem der Ansprüche 3, 10, dadurch gekennzeichnet, daß die mit der Rückhaltekapazität (24) zusammenwirkende Entleerungsvorrichtung ein Ventil (55) aufweist, das im tiefen Teil der Rückhaltekapazität (24) angeordnet ist und dessen bewegliche Ventilklappe (56) durch eine Steuervorrichtung beaufschlagt ist.

12. Flüssigkeits-Regelwiderstand nach Anspruch 9, dadurch gekennzeichnet, daß vom Boden (32) eines Blindrohrelements (31) der Eingangselektrode (20) eine Ringschale (110) aus Isoliermaterial vorsteht, die ringförmig mindestens zwei koaxiale Wände (111, 112) aufweist, die jede zwischen zwei aufeinanderfolgende Rohrelemente der Eingangselektrode (20) und der Ausgangselektrode (19) eingesetzt sind.

13. Flüssigkeits-Regelwiderstand nach Anspruch 1, dadurch gekennzeichnet, daß die eine der Elektroden (19) nur durch eine Stange gebildet wird, die vorzugsweise in einer Spitze (45) endet, und daß die andere Elektrode (20) nur ein rings um die Stange angeordnetes Rohr ist.

14. Flüssigkeits-Regelwiderstand nach Anspruch 13, dadurch gekennzeichnet, daß die Elektroden (19, 20) von einer Führungshülse (125) aus Isoliermaterial umgeben sind, welche in den im Behälter (17) enthaltenen Elektrolyten eintaucht.

15. Flüssigkeits-Regelwiderstand nach einem der Ansprüche 1 bis 14, dadurch gekennzeichnet, daß den Elektroden (19, 20) ein beweglicher Kontakt (86) zugeordnet ist, durch den sie elektrisch miteinander verbunden werden können, um sie außer Betrieb zu setzen.

16. Flüssigkeits-Regelwiderstand nach Anspruch 15, dadurch gekennzeichnet, daß der bewegliche Kontakt (80) verschiebbar auf einer Steuerstange (87) gehalten ist, die selbst in Richtung ihrer Achse hin- und herbeweglich gehalten ist, und daß er durch eine elastische Andruckvorrichtung (93) dauernd in Richtung auf eine Schulter (88) der Steuerstange (87) beaufschlagt ist.

17. Flüssigkeits-Regelwiderstand nach Anspruch 16, dadurch gekennzeichnet, daß die Steuerstange (87) des beweglichen Kontakts (86) von einer ihre Hin- und Herbewegung bewirkenden Steuervorrichtung beaufschlagt ist, die sich im ganzen quer zu ihrer Achse erstreckt.

18. Flüssigkeits-Regelwiderstand nach einem der Ansprüche 1 bis 17, dadurch gekennzeichnet, daß bei Benutzung mehrerer Phasen (A, B, C) mit zwei Elektroden (19, 20) der Elektrolytbehälter (17) diesen gemeinsam dient.

19. Flüssigkeits-Regelwiderstand nach Anspruch 18, dadurch gekennzeichnet, daß für die verschiedenen Phasen (A, B, C) auch eine gemeinsame Pulsiervorrichtung (72) vorgesehen ist, die geeignet ist, den Umlauf eines Flusses von Elektrolyt (18) zwischen ihren Elektroden (19, 20) zu bewirken, wobei zwischen den Elektroden und der Pulsiervorrichtung (72) ein Verteiler (75) eingeschaltet ist.

20. Flüssigkeits-Regelwiderstand nach einem der Ansprüche 1 bis 19, dadurch gekennzeichnet, daß die Elektroden (19, 20) sich in der Bereitschaftsstellung, vor der Einschaltung in einem Abstand vom Elektrolyten (18) befinden.

21. Flüssigkeits-Regelwiderstand nach einem der Ansprüche 1 bis 20, dadurch gekennzeichnet, daß eine Trennung, mindestens eine isolierende Trennung, zwischen den Elektroden (19, 20) und der zu ihnen gehörenden Pulsiervorrichtung (72) besteht.

## Claims

1. A liquid resistance rheostat of the kind comprising on the one hand a tank (17) containing electrolyte (18) and on the other hand at least two electrodes (19, 20) which, disposed at a spacing from each other, are intended to be connected to an electrical power source (10) and to the apparatus (11) to he supplied with power from the electrical power source respectively, characterized in that said electrodes (19, 20) define between the a volume (24) for circulation of the electrolyte (18) and associated therewith are propulsion means (72) for producing an effective circulation in a controlled fashion of a flow of electrolyte (18) between them.

2. A liquid resistance rheostat according to claim 1 characterised in that the circulation volume (24) which the two electrodes (19, 20) form between them itself constitutes baffle means for the electrolyte (18).

3. A liquid resistance rheostat according to claim 1 characterized in that the circulation volume (24) which the two electrodes (19, 20) form between the itself constitutes a retaining container means (54) for the electrolyte (18) and associated with said retaining container means (54) are discharge means for providing for emptying thereof in a controlled manner.

4. A liquid resistance rheostat according to claim 1 characterized in that the two electrodes (19, 20) are both generally annular and they are disposed substantially coaxially with respect to each other.

5. A liquid resistance rheostat according to claim 4 characterized in that one (20) at least of the electrodes, which is referred to herein for the sake of convenience as the inlet electrode, comprises a central tubular member (25) which is open at its two ends for inlet of the flow of electrolyte (18) while the other electrode (19), which is referred to herein for the sake of convenience as the outlet electrode, comprises at least one blind tubular member (27) which is engaged with clearance over the central tubular member (25) of the inlet electrode (20).

6. A liquid resistance rheostat according to claim 5 characterized in that, the electrodes (19, 20) being disposed vertically, the blind tubular member (27) of the outlet electrode (19) has its end (28) at the upper end of the central tubular member (25) of the inlet electrode (20).

7. A liquid resistance rheostat according to either one of claim 5 and 6 characterized in that a point (45) projects from the end (28) of the blind tubular member (27) of the outlet electrode (20), towards the central tubular member (25) of the inlet electrode (20) and on the axis of the central tubular member.

8. A liquid resistance rheostat according to any one of claim 5 to 7 characterized in that the free edge (43) of the blind tubular member (27) of the outlet electrode (19) is serrated.

9. A liquid resistance rheostat according to any one of claim 5 to 8 characterized in that the outlet electrode (19) successively comprises in rings at least two blind tubular members (27, 27', 30) and in alternating relationship therewith the inlet electrode (20) itself comprises at least one blind tubular member (31, 31') around its central tubular member (25).

10. A liquid resistance rheostat according to claim 3 and 9 in combination characterized in that the retaining container means (24) which the two electrodes (19, 20) form between the is defined by the blind tubular member or members (31, 31') of the inlet electrode (20).

11. A liquid resistance rheostat according to either one of claim 3 and 10 characterized in that the discharge means associated with the retaining container means (24) comprise a valve (55) which is disposed in the lower part of the retaining container means (24) and the cable valve member (56) of which is subjected to control means.

12. A liquid resistance rheostat according to claim 9 characterized in that projecting from the end (32) of a blind tubular member (31) of the inlet electrode (20) is an annular cup member (110) which is of insulating material and which is annularly provided with at least two coaxial partitions (111, 112) which are each inserted between two successive tubular members of said inlet electrode (20) and the outlet electrode (19).

13. A liquid resistance rheostat according to claim 1 characterized in that one of the electrodes (19) is reduced to a rod which is preferably terminated with a point (45) and the other electrode (20) is itself reduced to a tube disposed in annular relationship around said rod.

14. A liquid resistance rheostat according to claim 13 characterized in that the electrodes (19, 20) are surrounded by a guide tube (125) of insulating material which dips into the electrolyte contained in the tank (17).

15. A liquid resistance rheostat according to any one of claim 1 to 14 characterised in that associated with the electrodes (19, 20) is a movable contact (86) for electrically connecting the together to take them out of operation.

16. A liquid resistance rheostat according to claim 15 characterized in that said movable contact (86) is mounted slidably on a control rod (87) which is itself mounted for reciprocating movement in the direction of its axis and it is continuously urged towards a shoulder (88) on said control rod (87) by resilient bearing means (93).

17. A liquid resistance rheostat according to claim 16 characterized in that the control rod (87) of the cable contact (86) is subject to reciprocating control means extending generally transversely with respect to its axis.

18. A liquid resistance rheostat according to any one of claim 1 to 17 characterised in that, a plurality of phases (A, B, C) having two electrodes (19, 20) being used, they have the electrolyte tank (17) in common.

19. A liquid resistance rheostat according to claim 18 characterizec in that the various phases (A, B, C) also have in common the propulsion means (72) for circulaion of a flow of electrolyte (18) between their electrodes (19, 20) with a distributor (75) between said electrodes and said propulsion means (72).

20. A liquid resistance rheostat according to any one of claim 1 to 19 characterized in that in the waiting condition, prior to coming into operation, the electrodes (19, 20) are disposed at a spacing from the electrolyte (18).

21. A liquid resistance rheostat according to any one of claims 1 to 20 characterized in that there is an at least insulating gap between the electrodes (19, 20) and the propulsion means (72) which are associated therewith.

FIG.1

FIG.7

FIG.2

FIG.3

FIG.4

FIG.5

FIG.6A

FIG.6B

FIG.6C

FIG.6D

5

## FIG.8

## FIG.9

## — FIG.10 —

## — FIG.11 —

## FIG.12

# FIG.13

# FIG.15

# FIG.14